(19) Europäisches Patentamt
European Patent Office
Office européen des brevets

(11) Publication number: **0 155 995**
**B1**

(12) **EUROPEAN PATENT SPECIFICATION**

(45) Date of publication of patent specification: **15.02.89**

(51) Int. Cl.$^4$: **C 08 G 18/80**, C 08 G 18/69, C 08 G 69/00

(21) Application number: **84112466.2**

(22) Date of filing: **16.10.84**

(54) **Rapid bulk polymerization of polybutadiene/nylon and related block copolymers.**

(30) Priority: **29.03.84 US 595003**

(43) Date of publication of application:
**02.10.85 Bulletin 85/40**

(45) Publication of the grant of the patent:
**15.02.89 Bulletin 89/07**

(84) Designated Contracting States:
**BE DE FR GB NL**

(56) References cited:
**WO-A-83/03421**
**US-A-4 151 222**

(73) Proprietor: **THE FIRESTONE TIRE & RUBBER COMPANY**
**1200 Firestone Parkway**
**Akron, Ohio 44317 (US)**

(72) Inventor: **Hergenrother, William L.**
**195 Dorchester Road**
**Akron Ohio (US)**
Inventor: **Greenstreet, Arthur W.**
**9345 Summit Street**
**Clinton Ohio (US)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 155 995 B1

**Description**

The present invention is directed toward a process for the rapid polymerization of certain block copolymers. Most typical of such polymers are the copolymers of conjugated dienes and nylon which have been demonstrated to have useful properties as thermosets. The polymers have been described exclusively in several U.S. patents, as will be discussed hereinbelow in greater detail. The early polymers exhibited cold flow and subsequent work has provided novel processes for the elimination thereof. This invenion is a further step in the field whereby the polymers have use as thermosets, are non-cold flowing and can now be produced more rapidly as compared to the previous processes.

Copolymers of the type produced by the process of the present invention were first described in US—A—3,838,108 and WO—A—8303421. That patent taught the anionic polymerization of olefins and other monomers which were then end-capped with isocyanates or isothiocyanates. Typically, the olefin selected was butadiene and once end-capped, it was then reacted with other monomers, namely nylon forming or lactams containing at least three carbon atoms in the lactam ring. The resulting nylon block copolymers retained the favorable characteristics of the nylon such as good impact strength, good abrasion resistance and low coefficients of friction. Unexpectedly and additionally, they possessed the processing characteristics of the base polymer which in the case of the polybutadienes, meant milling and processing at ambient temperatures. Furthermore, they could be molded as plastics or as rubbers and at temperatures below the melt temperature of the nylon.

The only attendant problem possessed by these copolymers was that they exhibited cold flow. A substance is said to cold flow if a quantity of it will gradually flow or spread itself out over a flat surface even though it is normally a solid and will retain a given shape for a short period of time.

In US—A—4,070,344, a similar procedure was initially followed through the end-capping step of the polybutadiene or other base polymer with a polyisocyanate or polyisothiocyanate. This polymer was then reacted with compounds containing an amide, such as lactam, to give an imide type end group, which was subsequently hydrolyzed to form a stable amine terminated polymer which could itself be used or stored for an extended time and then reacted with other monomers to provide various block and graft copolymers. Exemplary monomers include amides, ureas, urethanes, imides and the like. These materials possessed useful polymer properties but also exhibited cold flow.

EP—A—104246 describes a process for preparing free flowing pellets from tacky, cold-flowing polymers. The steps include the addition of a non-cold flowing rubber to a tacky, cold flowing polymer to form a blend, pelletizing the blend and subjecting the pellets to a surface treatment which provides a coating that removes tack. The surface treatment is practiced by subjecting the pellets to oxidation, halogenation or hydroxylation in an aqueous solution. EP—A—137104 describes another process for the preparation of free flowing pellets of these copolymers. That process includes the steps of preparing in suspension the tacky, cold flowing polymer in the presence of a solution of non-cold flowing rubber to form a product, removing the suspension solvent, pelletizing and then subjecting the pellets to a surface treatment to rmeove tack.

With the exception of the above described two processes, it has not been possible heretofore to eliminate cold flow and tack from nylon-polybutadiene block copolymers and similar cold flowing copolymers. However, neither process could provide for the rapid bulk polymerization of the component monomers. In addition to the speed of the present process, there is also no necessity of solvent removal as required in the process of EP—A—137104.

The process of the present invention is broadly applicable to the rapid polymerization of block copolymers. It comprises the steps of preparing a mixture comprising from about 100 to 50 parts by weight of a stable, anionically polymerized cold flowing rubber end capped by a compound selected from the group consisting of polyisocyanates and polyisothiocyanates and terminated with an imide-forming group and from about 0 to 50 parts by weight of a non-cold flowing dry rubber neutralized with an amide-containing compound, charging the polymer mixture to a reaction vessel with a monomer having an active hydrogen other than a monomer utilized to form a polymer present in the polymer mixture and polymerizing the monomer to form a block copolymer with the imide terminated polymer.

The process of the present invention provides particularly for the rapid polymerization of polybutadiene/nylon-6 block copolymers and comprises the steps of preparing a mixture comprising from about 100 to about 50 parts by weight of a low molecular weight polybutadiene, terminated with an isocyanate and end-capped with caprolactam, with from about 0 to about 50 parts by weight of a dry non-cold flowing rubber neutralized with caprolactam, charging the polymer mixture to a reaction vessel with caprolactam and polymerizing the caprolactam to form a block copolymer with the caprolactam terminated polybutadiene.

The invention is directed specifically to a process for the rapid bulk polymerization of block copolymers comprising the steps of:
preparing a mixture comprising from 100 to 50 parts by weight of a stable, cold flowing rubber prepared by the anionic polyumerization of monomers selected from the group consisting of olefin, conjugated diene, vinyl substituted aromatic, vinyl substituted pyridine, vinyl substituted quinoline,

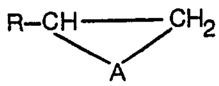

where A is O or S and R is H or an aliphatic, cycloaliphatic or aromatic group containing from 1 to 15 carbon atoms, inclusive,

$$RCH{=}A$$

where A is O or S and R is an aliphatic, cycloaliphatic or aromatic group containing from 1 to 15 carbon atoms, inclusive,

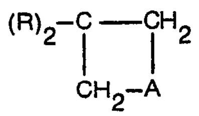

where A is O or S and R is an aliphatic, cycloaliphatic or aromatic group containing from 1 to 15 carbon atoms, inclusive, and

$$(R)_2C{=}S$$

where R is an aliphatic, cycloaliphatic or aromatic group containing from 1 to 15 carbon atoms, inclusive;

and wherein said cold flowing rubber is end-capped by a compound selected from the group consisting of isocyanates and isothiocyanates and terminated with an amide containing compound providing a stable imide type terminated rubber, and

from above 0 to 50 parts by weight of a dry non-cold flowing rubber selected from the group consisting of ethylene-propylene-hexadiene terpolymers, natural rubber, styrene-butadiene rubber, butyl rubber, branched butadiene rubber having a vinyl content of from 98 to 100% and a weight average molecular weight of 125,000, polynorbornene, polypentamer and thermoplastic elastomers of styrene and conjugated dienes, and neutralized with an amide containing compound;

charging said polymer mixture without hydrolyzing said end-capped cold flowing rubber to a reaction vessel with a monomer having an active hydrogen other than a monomer utilized to form a polymer present in said polymer mixture, wherein said monomer having an active hydrogen is selected from the group consisting of lactams, ureas, urethanes and imides; and

polymerizing said monomer at a temperature of at least about 120°C, said temperature being sufficient to flash off any solvents introduced during said step of preparing, and for a time of up to about 30 minutes whereby polymerization proceeds in the absence of solvents to form a block copolymer with said end-capped polymer.

A preferred embodiment of the present invention is directed to a process for the rapid bulk polymerization of polybutadiene/nylon-6 block copolymers comprising the steps of

preparing a mixture comprising from 100 to 50 parts by weight of polybutadiene having a weight average molecular weight of 3,000 and terminated by a compound selected from the group consisting of isocyanates and isothiocyanates and end-capped with caprolactam to provide a stable imide type terminated polymer, with from above 0 to 50 parts by weight of a branched, 1,2-polybutadiene having a vinyl content of from 98 to 100%, a weight average molecular weight of 125,000 and neutralized with caprolactam;

charging said polymer mixture, without hydrolyzing said end-capped polybutadiene, to a reaction vessel with caprolactam; and

polymerizing said caprolactam at a temperature of at least 120°C, said temperature being sufficient to flash off any solvents introduced during said step of preparing, and for a time of up to 30 minutes whereby polymerization proceeds in the absence of solvents to form a block copolymer with said end-capped polybutadiene.

In its most preferred form, the present invention provides a process for the rapid polymerization of caprolactam onto a terminally modified polybutadiene, thus producing a nylon-polybutadiene block copolymer. Polymerzization time has been reduced from about 120 to 180 minutes in solution at 160°C to about five to thirty minutes here in bulk at 180 to 185°C. The products obtained are equivalent in cure properties but the present process requires no subsequent drying to remove the solvent.

The use of a non-cold flowing rubber, such as high molecular weight high vinyl polybutadiene, as a post reaction additive or as a solution polymerization additive, to eliminate cold flow is also incorporated into the present process.

The first step of the process calls for the mixing of an anionically polymerizable cold flowing rubber or base polymer, terminated by an isocyanate and end-capped with dry caprolactam, with a non-cold flowing dry rubber, neutralized with dry caprolactam. Preferred ratios by weight are 2:1, respectively, although from 100 to 50 parts of the cold flowing rubber can be mixed with 0 to 50 parts of the non-cold flowing rubber.

Typical of the cold flowing rubber or base polymer is the low molecular weight 1,2-polybutadiene which is first terminated with a polyisocyanate or polyisothiocyanate as described in the aforementioned US—A—3,838,108, also discloses other base polymers, any of which can be utilized herein.

As is there disclosed, the monomers which can be utilized include a wide variety of materials such as dienes and vinyl substituted aromatics, *e.g.*, 1,3-butadiene and styrene, respectively. Generally, any monomer capable of undergoing anionic polymerization can be used. Some of these monomers can be generally classified as olefins since they contain at least one olefinic group and may be represented by the following structural formulae, wherein R is hydrogen, alkyl, cycloalkyl, and aromatic ring or a substituted aromatic ring:

1) $CH_2 = CACN$ wherein A is CN, $CF_3$, $CH_3$ or H

2) $CH_2 = CACO_2R$ wherein A is $CO_2R$, $SO_2R$, $CH_3$ or H

3) $CH_2 = CANO_2$ wherein A is Cl, $CH_3$ or H

4) $CH_2 = CACON(R)_2$ wherein A is $CH_3$ or H.

Other monomers which can be anionically polymerized are represented by the following structural formulae:

5) 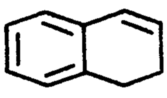 ; 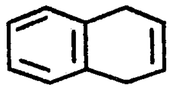

6) 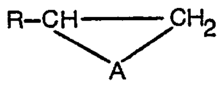

where A is O or S and R is H or an aliphatic, cycloliphatic or aromatic group containing from 1 to 15 carbon atoms, inclusive.

7) RCH=A where A is 0 or S and R is an aliphatic, cycloaliphatic or aromatic group containing from 1 to 15 carbon atoms, inclusive.

8) 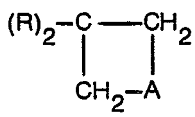

where A is O or S and R is an aliphatic, cycloaliphatic or aromatic group containing from 1 to 15 carbon atoms, inclusive.

9) $(R)_2C=S$ where R is an aliphatic, cycloaliphatic or aromatic group containing from 1 to 15 carbon atoms, inclusive.

The monomers as represented by formulae 6, 7, 8 and 9 are preferred in the subject invention. Examples of such monomers include ethylene oxide, propylene oxide, styrene oxide, ethylene sulfide, propylene sulfide, styrene sulfide, acetaldehyde, propionaldehyde, isobutyraldehyde, n-caproaldehyde, acetthioaldehyde, propionthioaldehyde, isobutyrthioaldehyde, n-caprothioaldehyde, 3-dimethyloxycyclobutane, 3-diethyloxycyclobutane, 3-methylethyloxycyclobutane, 3-dimethylthiocyclobutane, 3-diethylthiocyclobutane, 3-methylethylthiocyclobutane, methyl ethyl thioketone, methyl isopropyl thioketone and diethyl thioketone. Suitable monomers represented by formula No. 9 do not include large R's such as two phenyl groups since such monomers are difficult to polymerize due most probably to steric hindrance.

Other preferred monomers which may generally be used to prepare the isocyanate terminated polymers of this invention are the conjugated dienes and the vinyl substituted aromatic compounds. The conjugated dienes ordinarily contain from 4 to 12 carbon atoms and preferably from 4 to 8 carbon atoms. Examples of such dienes include 1,3-butadiene; isoprene; 2,3-dimethyl-1,3-butadiene; 2-methyl-1,3-pentadiene; 3,4-dimethyl-1,3-hexadiene; 4,5-diethyl-1,3-octadiene; 3-butyl-1,3-octadiene; phenyl-1,3-butadiene and the like. The vinyl substituted aromatic compounds include styrene, 1-vinylnaphthalene, 2-vinylnaphthalene, and the alkyl, cycloalkyl, aryl, alkaryl and arakyl derivatives thereof in which the total number of carbon atoms in the combined substituents is generally not greater than 12. Examples of such compounds include 3-methylstyrene; alpha-methylstyrene; 4-n-propylstyrene, 4-t-butylstyrene, 4-dodecylstyrene, 4-cyclohexylstyrene; 2-ethyl-4-benzylstyrene; 4-methoxystyrene; 4-dimethylaminostyrene; 3,5-diphenoxystyrene; 4-p-tolylstyrene; 4-phenylstyrene; 4,5-dimethyl-1-vinylnaphthalene; 3-n-propyl-2-vinylnaphthalene and the like.

The conjugated dienes and the vinyl substituted aromatic compounds as well as many of the other monomers noted herein generally can be polymerized alone or in admixture to form homopolymers, copolymers or block copolymers which serve as the base polymer. The dienes which are preferred are 1,3-butadiene and isop- which are preferred are 1,3-butadiene and isoprene, and preferred vinly substituted aromatic 4-t-butylstyrene. A preferred base copolymer is styrene-butadiene.

Yet another group of monomers which can be employed are the heterocyclic nitrogen containing monomers such as pyridine and quinoline derivatives containing at least 1-vinyl or alphamethylvinyl group such as 2-vinylpyridine, 3-vinylpyridine, 4-vinylpyridine, 3-ethyl-5-vinylpyridine, 3-methyl-5-vinylpyridine, 3,5-diethyl-4-vinylpyridine and similar mono- and di-substituted alkenyl pyridines and like quinolines such as 2-vinylquinoline, 3-vinylquinoline, 4-vinylquinoline and so forth. In general the various vinyl substituted pyridines and vinyl substituted quinolines are also preferred monomers.

All of the foregoing monomers are suitable for preparation of block copolymers with caprolactams and the other monomers disclosed hereinbelow and some combinations would not exhibit the property of cold flow. Inasmuch as the use of a non-cold flowing rubber is employed for the purpose of removing cold flow from the block copolymer, not to provide rapid polymerization, it will be understood that the non-cold flowing rubber is an optional component. Similarly, where cold flow would not be objectionable, the non-cold flowing rubber can be omitted.

This base polymer is first terminated with an isocyanate and then reacted with an amide containing compound such as dry caprolactam in the manner set forth in the aforementioned U.S. Pat. No. 4,070,344. This results in the formation of a stable imide type terminated polymer.

The non-cold flowing rubber is preferably a high molecular weight high vinyl 1,2-polybutadiene. It is a rubber, as is the linear, 1,2-polybutadiene material discussed hereinabove, but differs primarily by the fact that it is non-cold flowing, while the former is a cold flowing material. It can be prepared by the anionic polymerization of 1,3-butadiene in the presence of an organolithium initiator modified with bis-heterocyclic ethane compounds such as bis-morpholine ethane (DME), bis-piperidino ethane (DPE), bis-pyrrolidino ethane (DPEE), ad bis-N-methyl piperazino ethane (DNMPE). The polymer obtained by this process contains as much as 100 percent vinyl polybutadiene and randomly distributed syndio and isotactic units. In general, a bispiperidino ethane modified n-butyllithium initiator can be readily employed. Neutralization with dry caprolactam is preferable to provide a stable, storable solution that will be compatible with the anionic nylon polymerization involved in the last step of the Maran resin preparation.

Both polymers employed in the mixture are end-capped or terminated with caprolactam for compatibility with the caprolactam polymerization step which will follow to produce the Maran resin. It is to be understood that other compounds containing a amine group could be substituted for the terminal group depending upon the particular copolymer that is to be prepared. As such, the subject invention is not to be limited to caprolactam terminated polymers.

The mixture of polymers is preferably prepared in a nonreactive solvent, *e.g.*, a paraffin, cycloparaffin or aromatic having from four to about 10 carbon atoms, such as hexane, heptane, cyclohexene, benzene, toluene and the like, and then concentrated to less than 20 percent solvent. The solvent is optional and, therefore, solvent volume can be minimized to provide solutions of at least 80 percent solids and easily higher. In the work reported hereinbelow, 80 percent by weight rubber was employed for convenience in transferring the cold-flowing rubber from the reactor in which it was prepared to the reactor wherein the block copolymer was formed. Nevertheless, it is within the skill of the art to employ a system where solvent use is significantly limited if not eliminated so long as effective mixing of the component reactants can be achieved.

Effective mixing must occur between the highly viscous cold-flowing rubber, rubber mixture or less viscous solution thereof and a fluid, *i.e.*, caprolactam or other block polymer-forming monomer. Suitable mixing apparatus can be selected from both the rubber and the plastics industries for the addition of compounding additives. For a batch process, batch compounding mixers including those having two or more sigma blade rotors, such as Brabender lab mixers can be employed as well as Banbury rubber compounders and, general purpose sigma blade mixers. For a continuous process, twin screw compounders and extruders are preferred while static mixers and simple extruders with mixing screws can also be employed.

Inasmuch as twin screw compounders are known to be very effective in removing solvents from rubber, at least one production configuration would feed the 23 percent rubber solution prepared hereinbelow directly into the first zone of such apparatus from which the solvent would be stripped. The lactam or other monomer would be injected into the second zone wherein the polymerization would commence. Static mixtures could be added for additional residence time. A twin screw compounder is also very well suited because it provides multiple kneading zones for dispersion and several different temperature zones. The twin screw compounder utilized in the work discussed hereinbelow was a Werner-Pfleiderer, Model ZSK—30 with a 900 mm length barrel.

The next step of the process occurs simultaneously with the step of feeding the rubber solution mixture to the reaction vessel and that is feeding the monomer to be polymerized to the rubber or base polymer. In the preferred embodiment, this is dry caprolactam in order to form a block of nylon-6. It is also preferred, but not essential, to provide an antioxidant in order to prevent gellation. Any known antioxidant in the rubber industry is suitable and amounts range from about 0.01 to about 10 weight percent based upon the dry weight of the rubbers employed.

The amount of the two feeds is somewhat dependent upon the properties desired for the resultant copolymer. In general, the rubber mixture can comprise from about 15 to about 90 parts by weight (solids) with 35 to 25 parts preferred, and the second monomer will comprise the necessary compliment to equal 100 parts.

As noted hereinabove, the temperature of the polymerization reaction is preferably between about 180 to 185°C although a broader range is possible between about 120 and 205°C for the lactams and down to about 20°C or less for the other monomers. Polymerization time is as short as five minutes and need not exceed 30 minutes. While longer times may be employed, in the interest of effecting a rapid polymerization, 30 minutes is a practical upper limit.

After the copolymer is formed, it can be pelletized if it is intended to be fed to the hopper of an injection molding apparatus. This is readily performed by known methods in the art, one by way of example would involve extruding the copolymer as a continuous strand from the reactor extruder and chopping into pellets.

The product resulting from the process of this invention is free from cold flow but may still possess surface tack, *i.e.*, stickiness. The process may therefore include a separate step whereby the particles or pellets are subjected to a surface treatment, namely addition to an aqueous solution which can react chemically therewith. Typical chemical reactions include oxidation, halogenation, hydroxylation and the like. Suitable treatment agents would include aqueous solutions of $Br_2$, $Cl_2$, NaOCl, KOCl, $Ca(OCl)_2$, $KNnO_4$, $K_2Cr_2O_7$, $H_2O_2$, $OsO_4$ and the like. While several of these can be employed alone, hydrochloric acid can be added to the sodium, potassium and calcium salts to speed the treatment. Where the cold flowing polymer comprises polybutadiene homopolymer or copolymer it is believed that the chemical treatment adds to the surface unsaturation imparted by the polybutadiene portion of the blend.

The step can be practiced by immersing previously formed pellets in one of the aqueous solutions set forth hereinabove and stirring for about 0.5 to about 30 minutes, depending upon

the concentration employed, at a temperature of 25°C. The treated pellets are then filtered from the aqueous solution and washed with water to remove any residue solution. After sufficient washing, the pellets are then air dried. The resulting pellets are then also tack free.

An alternative surface treatment would include dusting or coating the pellets with a layer of a powdery filler material such as talc, mica, silica, polyethylene or the like. Where the presence of a filler material in the final product would not be undesirable from consideration of physical properties or appearance, the dusting step can be employed. If, on the other hand, no filler should be present, the first treatment with an aqueous solution as disclosed hereinabove should be employed.

Before proceeding to specific examples hereinbelow illustrating the preparation of a non-cold flowing Nylon/polybutadiene block copolymer, *i.e.*, Maran, the foregoing description can be broadened to include other rubbers and monomers which can be employed according to the process of the present invention for the rapid formation of other copolymers.

First, with respect to the cold-flowing rubber, any of the rubber-producing monomers disclosed in US—A—3,838,108 can be selected and initially end-capped with a polyisocyanate or polyisothiocyanate as is described therein. Next, as to the non-cold flowing rubber, in addition to the high molecular weight high vinyl 1,2-polybutadiene discussed hereinabove, others include rubbers such as ethylene-propylene-diene terpolymer; Nordel®, a registered trademark of E. I. duPont de Nemours and Co. for ethylenepropylene-hexadiene terpolymer; natural rubber; styrenebutadiene rubber; butyl rubber; Norsorex®, a poly norbornene available from American Cyanamid; polypentamer; the thermoplastic elastomers of styrene and conjugated dienes such as Kraton®, a styrene-butadienestyrene block copolymer. Kraton is a registered trademark of Shell Chemical Co.

Finally, in order to conclude the polymerization with the addition of the second block, any of the foregoing isocyanate-reactive monomers or monomer groups disclosed in US—A— 3,838,108 can be employed in lieu of the nylons such as the ureas, urethanes, urethane-ureas, imides, thioureas, thiourethanes and the like. These have in common the fact that each contains an active hydrogen which is reactive toward the isocyanate terminated base polymer as was amply illustrated in US—A—3,838,108. Hence, for purposes of this invention, the second block forming monomer can be generally described as one having an active hydrogen.

In order to demonstrate practice of the present invention two block copolymers comprising low molecular weight, high vinyl polybutadiene and nylon-6 were prepared as will not be set forth. Cold flow was eliminated by the use of non-cold flowing rubber, *viz.*, high molecular weight high vinyl 1,2-polybutadiene.

A solution comprising 1,2-polybutadiene-NCO, end-capped with dry caprolactam, $\overline{M}w$ 3000 and 1,2-polybutadiene, $\overline{M}w$ 125,000, prepared with DPE and neutralized with dry caprolactam was prepared by mixing two parts and one part, respectively, of 23 percent rubber solutions in hexane to provide a rubber solution which was concentrated to 79.4 percent total solids. The first or cold flowing rubber was prepared according to the process set forth in US—A—4,070,344 with the exception of the step of hydrolyzation which was not employed.

The non-cold flowing high molecular weight polybutadiene rubber was separately prepared by adding to a clean, dry, stirred reactor 4545 g of a 24.5% blend of butadiene in hexane. After cooling to about 4°C, 2.8 cc of 4.66 molar (0.0134 moles) of dipiperidinoethane and 4.0 cc of a 1.53 molar (0.00612 moles) solution of n-butyl lithium in hexane was charged. The reaction was stirred for 16 hours and then 8.0 cc of a 1 molar (0.008 moles) solution of dry caprolactam in toluene was added. This rubber was 23.4% solids and had a 1,2 content of 98% and an intrinsic viscosity of 1.42 dl/g as measured at 25°C in toluene.

Example No. 1

This polymerization was conducted in continuous fashion in the ZSK—30 twin screw compounder by metering 10.2 g/min of the foregoing rubber mixture solution and 8.6 g/min of dry caprolactam containing 1 percent of phenyl beta naphthylamine (PBNA) as an antioxidant. The components were in the extruder for a total of five minutes. The various zones of the extruder, from throat to die face, were maintained at 190°, 184°, 194°, 182° and 186°C. The extruder was run at 25 rpm at a 13 to 15 percent torque, 100 percent torque equal to 86 Nm. These conditions were held for 50 minutes during which time the continuous strand was collected, cooled and chopped. It will be noted from the low torque of the compounder that the presence of a solvent was not necessary.

Nitrogen analysis established that the pellets had a nylon-6 content of 42.3 percent. Plasticity was 42.2 $cm^2$ and intrinsic viscosity was 0.65 at 25° C in 1/1 phenol/tetrachloroethane. Oxidation of the pellets with $Ca(OCl)_2/HCl$ gave free flowing pellets that could be compounded or cured as in Example No. 2 to give a hard, tough thermoset.

Example No. 2

As an example of a batch process, into a Brabender mixer, purged with nitrogen, heated to 190°C and operating at 60 rpm was charged 35 g of the rubber mixture solution and 28 g of dry caprolactam containing 0.3 g of PBNA. No torque increase was noted during the subsequent reaction but the mixture changed from a wet semiliquid to a dry putty like mixture between three and five minutes of mixing which indicates that the typical continuous-rubber-phase composition, which characterizes Maran resins, was maintained. After eight minutes the mixture was

removed and cooled.

A plasticity of 38 $cm^2$ was measured as in Example No. 1 by pressing 0.5 g at 13.8 MPa (2000 psi) for 30 seconds at 150°C. Water solubles were found to be 1.8 percent, typical of solution Maran prepared at longer times. This polymer was compounded with 150 parts of potter glass, 2 parts dicumyl peroxide and 1.5 parts of 3-amino-propyltrimethoxysilane to give a hard, tough thermoset after 20 minutes of curing at 175°C.

Example No. 3

The procedure for Example No. 2 was repeated without the addition of PBNA in order to determine the effect of its presence. No torque increase was observed for 21.5 minutes at which time the 1,2-polybutadiene began to crosslink with a total torque rise of 2.26 to 22.6 N (20 to 200 in-lbs) being recorded over two minutes. Inasmuch as the reaction time was over four times longer than the polymerization time, the PBNA addition was shown to provide an improved manner for preventing gellation but otherwise not essential to the rapid copolymerization characteristic of the present invention.

Based upon the results reported herein, it should be apparent that the novel process of the present invention can be employed to provide block copolymers of polybutadiene and nylon, as well as related copolymers, rapidly. These polymers essentially retain their useful physical properties and furthermore, undesirable cold flow and tack can be virtually eliminated. It is to be understood that the various examples reported herein have been provided to present results obtainable by practice of the disclosed invention. Inasmuch as various polymers, as well as substances for the surface treatment step, that can be employed to practice the process of the present invention have been disclosed, the invention is not to be limited by the examples provided herein. It will be understood, therefore, that other polymers and surface treatment agents or methods of treatment can be substituted for those that have been exemplified. Regarding the selection of fillers, curatives and other additives and the like, the present invention should not be restricted to less than the total group of such compounds which are known for the preparation of thermoplastic resins inasmuch as they are only optionally employed and do not constitute the point of novelty.

**Claims**

1. A process for the rapid bulk polymerization of block copolymers comprising the steps of:

preparing a mixture comprising from 100 to 50 parts by weight of a stable, cold flowing rubber prepared by the anionic polymerization of monomers selected from the group consisting of olefin, conjugated diene, vinyl substituted aromatic, vinyl substituted pyridine, vinyl substituted quinoline,

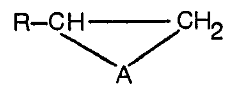

where A is O or S and R is H or an aliphatic, cycloaliphatic or aromatic group containing from 1 to 15 carbon atoms, inclusive,

$$RCH=A$$

where A is O or S and R is an aliphatic, cycloaliphatic or aromatic group containing from 1 to 15 carbon atoms, inclusive,

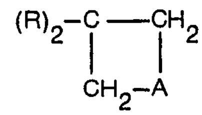

where A is O or S and R is an aliphatic cycloaliphatic or aromatic group containing from 1 to 15 carbon atoms, inclusive, and

$$(R)_2C=S$$

where R is an aliphatic, cycloaliphatic or aromatic group containing from 1 to 15 carbon atoms, inclusive;

and wherein said cold flowing rubber is end-capped by a compound selected from the group consisting of isocyanats and isothiocyanates and terminated with an amide containing compound providing a stable imide type terminated rubber, and

from above 0 to 50 parts by weight of a dry non-cold flowing rubber selected from the group consisting of ethylene-propylene-hexadiene terpolymers, natural rubber, styrene-butadiene rubber, butyl rubber, branched butadiene rubber having a vinyl content of from 98 to 100% and a weight average molecular weight of 125,000, polynorbornene, polypentamer and thermoplastic elastomers of styrene and conjugated dienes, and neutralized with an amide containing compound;

charging said polymer mixture without hydrolyzing said end-capped cold flowing rubber to a reaction vessel with a monomer having an active hydrogen other than a monomer utilized to form a polymer present in said polymer mixture, wherein said monomer having an active hydrogen is selected from the group consisting of lactams, ureas, urethanes and imides; and

polymerizing said monomer at a temperature of at least about 120°C, said temperature being sufficient to flash off any solvents introduced during said step of preparing, and for a time of up to about 30 minutes whereby polymerization proceeds in the absence of solvents to form a block copolymer with said end-capped polymer.

2. A process as set forth in Claim 1 for the rapid bulk polymerization of polybutadiene/nylon-6 block copolymers comprising the steps of

preparing a mixture comprising from 100 to 50 parts by weight of polybutadiene having a weight average molecular weight of 3,000 and terminated by a compound selected from the group consisting of isocyanates and isothiocyanates and end-capped with caprolactam to provide a stable imide type terminated polymer, with from above 0 to 50 parts by weight of a branched, 1,2-polybutadiene having a vinyl content of from 98 to 100%, a weight average molecular weight of 125,000 and neutralized with caprolactam;

charging said polymer mixture, without hydrolyzing said end-capped polybutadiene, to a reaction vessel with caprolactam; and

polymerizing said caprolactam at a temperature of at least 120°C, said temperature being sufficient to flash off any solvents introduced during said step of preparing, and for a time of up to 30 minutes whereby polymerization proceeds in the absence of solvents to form a block copolymer with said end-capped polybutadiene.

3. A process as set forth in Claims 1 and 2, wherein said mixture is fed to said reaction vessel as a solution.

4. A process as set forth in Claim 3, wherein the solvent for said solution is hexane.

5. A process as set forth in Claims 1 and 2, including the further steps of:

forming pellets of said block copolymer; and

subjecting said pellets to a surface treatment whereby a coating is provided to remove tack.

6. A process as set forth in Claim 5, wherein said step of subjecting said pellets includes immersing said pellets in an aqueous solution containing at least one member of the group consisting of $Br_2$, $Cl_2$, NaOcl, KOCl, $Ca(OCl)_2$, $KMnO_4$, $K_2Cr_2O_7$, $H_2O_2$ and $OsO_4$.

7. A process as set forth in Claim 6, wherein said aqueous solution contains HCl and at least one member of the group consisting of NaOCl, KOCl, $Ca(OCl)_2$, $KMnO_4$ and $K_2Cr_2O_7$.

8. A process as set forth in Claim 5, wherein said step of subjecting said pellets comprises oxidation with an aqueous solution.

9. A process as set forth in Claim 5, wherein said step of subjecting said pellets comprises halogenation with an aqueous solution.

10. A process as set forth in Claim 5, wherein said step of subjecting said pellets comprises hydroxylation with an aqueous solution.

11. A process as set forth in Claim 5, wherein said step of subjecting said pellets includes coating said pellets with a finely powdered filler material.

12. A process as set forth in Claim 1, wherein said cold flowing rubber comprises low molecular weight polybutadiene having a weight average molecular weight of about 3,000.

13. A process as set forth in Claim 1, wherein said monomer having an active hydrogen is caprolactam.

**Patentansprüche**

1. Verfahren zur raschen Massenpolymerisation von Blockcopolymeren, gekennzeichnet durch die Stufen:

Herstellung eines Gemisches, das 100 bis 50 Gew.-Teile eines stabilen kaltfließenden Kautschuks, hergestellt durch anionische Polymerisation von Monomeren, ausgewählt aus der Gruppe bestehend aus Olefin, konjugiertem Dien, vinylsubstituiertem Aromat, vinylsubsituiertem Pyridin, vinylsubstituiertem Chinolin,

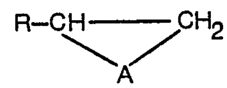

wobei A für O oder S steht und R für H oder eine aliphatische, cycloaliphatische oder aromatische Gruppe mit 1 bis 15 Kohlenstoffatomen inklusive,

$$RCH=A$$

worin A für O oder S steht und R für eine aliphatische, cycloalip tische oder aromatische Gruppe mit 1 bis 15 Kohlenstoffatomen inklusive,

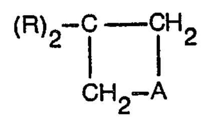

worin A für 0 oder S steht und R für eine aliphatische, cycloaliphatische oder aromatische Gruppe mit 1 bis 15 Kohlenstoffatomen inklusive und

$$(R)_2C=S$$

worin R für eine aliphatische, cycloaliphatische oder aromatische Gruppe mit 1 bis 15 Kohlenstoffatomen inklusive steht;

und wobei der kaltfließende Kautschuk durch eine Verbindung, ausgewählt aus der Gruppe bestehend aus Isocyanaten und Isothiocyanaten, endverkappt worden ist und mit einer Amid enthaltenden Verbindung terminiert worden ist, um einen stabilen terminierten Kautschuk vom Imidtyp zu erhalten; und

mehr als 0 bis 50 Gew.-Teile eines trockenen, nichtkaltfließenden Kautschuks, ausgewählt aus der Gruppe bestehend aus Ethylen-Propylen-Hexadien-Terpolymeren, Naturkautschuk, Styrol-Butadien-Kautschuk, Butylkautschuk, verzweigter Butadienkautschuk mit einem Vinylgehalt von 98 bis 100% und einem gewichtsmittleren Molekulargewicht von 125.000, Polynorbornen, Polypentamer und thermoplastischen Elastomeren von Styrol und konjugierten Dienen, der mit einer Amid enthaltenden Verbindung neutralisiert worden list, enthält;

Einbringung des Polymergemisches ohne Hydrolyse des endverkappten kaltfließenden Kautschuks in ein Reaktionsgefäß mit einem anderen Monomeren als wie es zur Bildung eines Polymeren,. das in dem genannten Polymergemisch vorhanden ist, verwendet worden ist, das aktiven Wasserstoff hat, wobei das Monomere mit aktivem Wasserstoff aus der Gruppe bestehend aus Lactamen, Harnstoffen, Urethanen

und Imiden ausgewählt wird; und

Polymerisation des Monomeren bei einer Temperatur von mindestens etwa 120°C, wobei die Temperatur genügend ist, daß irgendwelche Lösungsmittel, die während der Stufe der Herstellung eingeführt worden sind, schnell abgedampft werden und über einen Zeitraum von bis zu etwa 30 Minuten, wodurch die Polymerisation in Abwesenheit von Lösungsmitteln ablaüft, um ein Blockcopolymers mit dem endverkappten Polymeren zu bilden.

2. Verfahren nach Anspruch 1, zur raschen Massenpolymerisation von Polybutadien/Nylon-6-Blockcopolymeren, gekennzeichnet durch die Stufen:

Herstellung eines Gemisches, das 100 bis 50 Gew.-Teile Polybutadien mit einem gewichtsmittleren Molekulargewicht von 3000, das durch eine Verbindung, ausgewählt aus der Gruppe bestehend aus Isocyanaten und Isothiocyanaten, terminiert und mit einem Caprolactam endverkappt worden ist, um ein stabiles terminiertes Polymeres vom Imidtyp zu erhalten, mit mehr als 0 bis 50 Gew.-Teilen eines verzweigten 1,2-Polybutadiens mit einem Vinylgehalt von 98 bis 100%, einem gewichtsmittleren Molekulargewicht von 125.000, das mit Caprolactam neutralisiert worden ist, enthält;

das Polymergemisch ohne Hydrolyse des endverkappten Polybutadiens in ein Reaktionsgefäß mit Caprolactam einbringt; und

Polymerisation des Caprolactams bei einer Temperatur von mindestens 120°C, wobei die Temperatur ausreichend ist, um irgendwelche Lösungsmittel, die während der Stufe der Herstellung eingeführt worden sind, schnell abzudampfen und über einen Zeitraum von bis zu 30 Minuten, wodurch die Polymerisation in Abwesenheit von Lösungsmitteln abläuft, um ein Blockcopolymeres mit dem endverkappten Polybutadien zu bilden.

3. Verfahren nach Anspruch 1 und 2, dadurch gekennzeichnet, daß man das Gemisch in das Reaktionsgefäß als Lösung einspeist.

4. Verfahren nach Anspruch 3, gekennzeichnet, daß das Lösungsmittel für die Lösung Hexan ist.

5. Verfahren nach Anspruch 1 und 2, gekennzeichnet, durch die weiteren Stufen:

Bildung von Pellets des Blockcopolymeren; und

Unterwerfung der Pellets einer Oberflächenbehandlung, wodurch ein Überzug vorgesehen wird, um eine Klebrigkeit zu entfernen.

6. Verfahren nach Anspruch 5, gekennzeichnet, daß die genannte Stufe der Unterwerfung der Pellets die Eintauchung der Pellets in eine wäßrige Lösung einschließt, die mindestens eine Substanz aus der Gruppe bestehend aus $Br_2$, $Cl_2$, NaOCl, KOCl, $Ca(OCl)_2$, $KMnO_4$, $K_2Cr_2O_7$, $H_2O_2$ und $OsO_4$ enthält.

7. Verfahren nach Anspruch 6, dadurch gekennzeichnet, daß die wäßrige Lösung HCl und mindestens eine Substanz aus der Gruppe bestehend aus NaOCl, KOCl, $Ca(OCl)_2$, $KMnO_4$, und $K_2Cr_2O_7$ enthält.

8. Verfahren nach Anspruch 5, dadurch gekennzeichnet, daß die Stufe der Unterwerfung der Pellets die Oxidation mit einer wäßrigen Lösung umfaßt.

9. Verfahren nach Anspruch 5, dadurch gekennzeichnet, daß die Stufe der Unterwerfung der Pellets die Halogenierung mit einer wäßrigen Lösung umfaßt.

10. Verfahren nach Anspruch 5, dadurch gekennzeichnet, daß die Stufe der Unterwerfung der Pellets die Hydroxylierung mit einer wäßrigen Lösung umfaßt.

11. Verfahren nach Anspruch 5, dadurch gekennzeichnet, daß die Stufe der Unterwerfung der Pellets die Beschichtung der Pellets mit einem feingepulverten Füllstoffmaterial umfaßt.

12. Verfahren nach Anspruch 1, dadurch gekennzeichnet, daß der kaltfließende Kautschuk niedermolekulares Polybutadien mit einem gewichtsmittleren Molekulargewicht von etwa 3000 enthält.

13. Verfahren nach Anspruch 1, dadurch gekennzeichnet, daß das Monomere mit aktivem Wasserstoff Caprolactam ist.

## Revendications

1. Procédé de polymérisation rapide en masse de copolymères séquencés, comprenant les étapes consistant:

à préparer un mélange comprenant 100 à 50 parties en poids d'un caoutchouc stable, présentant un fluage à froid, préparé par polymérisation anionique de monomères choisis dans le groupe comprenant une oléfine, un diène conjugé, un composé aromatique à substitution vinyle, une pyridine à substitution vinyle, une quinoléine à substitution vinyle,

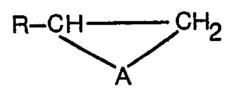

formule dans laquelle A représente O ou S et R représente H ou un groupe aliphatique, cycloaliphatique ou aromatique contenant 1 à 15 atomes de carbone inclus,

RCH=A

formule dans laquelle A représente O ou S et R représente un groupe aliphatique, cycloaliphatique ou aromatique contenant 1 à 15 atomes de carbone inclus,

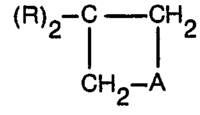

formule dans laquelle A représente O ou S et R représente un groupe aliphatique, cycloaliphatique ou aromatique contenant 1 à 15 atomes de carbone inclus, et

$(R)_2C=S$

formule dans laquelle R représente un groupe aliphatique, cycloaliphatique ou aromatique contenant 1 à 15 atomes de carbone inclus;

et dans lequel ledit caoutchouc présentant un fluage à froid est muni d'une protection terminale avec un composé choisi dans le groupe comprenant des isocyanates et des isothiocyanates et est terminé avec un composé à fonction amide donnant un caoutchouc stable à terminaison de type imide, et

plus de 0 à 50 parties en poids d'un caoutchouc sec, ne présentant pas de fluage à froid, choisi dans le groupe comprenant des terpolymères éthylène-propylénehexadiène, le caoutchouc naturel, le caoutchouc styrènebutadiène, le caoutchouc butyle, un caoutchouc butadiène ramifié ayant une teneur en groupes vinyle de 98 à 100% et une moyenne en poids du poids moléculaire de 125 000, le polynorbornène, un polypontamère et des élastomères thermoplastiques de styrène et de diènes conjugués, et neutralisé avec un composé à fonction amide;

à introduire le mélange de polymères, sans hydrolyse dudit caoutchouc à protection terminale présentant un fluage à froid, dans un réacteur avec un monomère renfermant de l'hydrogène actif autre qu'un monomère utilisé pour former un polymère présent dans ledit mélange de polymères, ledit monomère renfermant de l'hydrogène actif étant choisi dans le groupe comprenant des lactames, des urées, des uréthannes et des imides; et

à polymériser ledit monomère à une température d'au moins environ 120°C, ladite température étant suffisante pour éliminer par vaporisation instantanée tous les solvants introduits au cours de ladite étape de préparation, et pendant un temps allant jusqu'à environ 30 minutes, la polymérisation s'effectuant ainsi en l'absence de solvants pour former un copolymère séquencé avec ledit polymère à protection terminale.

2. Procédé suivant la revendication 1, destiné à la polymérisation rapide en masse de copolymères séquencés polybutadiène/Nylon 6, comprenant les étapes consistant

à préparer un mélange comprenant 100 à 50 parties en poids d'un polybutadiène ayant une moyenne en poids du poids moléculaire de 3000 et étant terminé avec un composé choisi dans le groupe comprenant des isocyanates et des isothiocyanates et étant muni d'une protection terminale avec la caprolactame pour donner un polymère stable à terminaison de type imide, avec plus de 0 à 50 parties en poids d'un 1,2-polybutadiène ramifié ayant une teneur en groupes vinyle de 98 à 100%, une moyenne en poids du poids moléculaire de 125 000 et étant neutralisé avec le caprolactame;

à introduire ledit mélange de polymères, sans hydrolyse dudit polybutadiène à protection terminale, dans un réacteur avec le caprolactame; et

à polymériser ledit caprolactame à une température d'au moins 120°C, ladite température étant suffisante pour éliminer par vaporisation instantanée tous les solvants introduits au cours de ladite étape de préparation, et pendant un temps allant jusqu'à 30 minutes, la polymérisation s'effectuant ainsi en l'absence de solvants pour former un copolymère séquencé avec ledit polybutadiène à protection terminale.

3. Procédé suivant la revendications 1 et 2, dans lequel le mélange est introduit dans le réacteur sous forme d'une solution.

4. Procédé suivant la revendication 3, dans lequel le solvant pour la solution est l'hexane.

5. Procédé suivant les revendications 1 et 2, comprenant les étapes supplémentaires consistant:

à former des pastilles du copolymère séquencé; et

à soumettre les pastilles à un traitement de surface, un revêtement étant ainsi produit pour supprimer l'adhésivité.

6. Procédé suivant la revendication 5, dans lequel l'étape de traitement des pastilles consiste à immerger les pastilles dans une solution aqueuse contenant au moins un membre du groupe comprenant $Br_2$, $Cl_2$ NaOCl, KOCl, $Ca(OCl)_2$, $KMnO_4$, $K_2Cr_2O_7$, $H_2O_2$ et $OsO_4$.

7. Procédé suivant la revendiction 6, dans lequel la solution aqueuse contient HCl et au moins un membre du groupe comprenant NaOCl, KOCl, $Ca(OCl)_2$, $KMnO_4$ et $K_2Cr_2O_7$.

8. Procédé suivant la revendication 5, dans lequel l'étape de traitement des pastilles consiste en une oxydation avec une solution aqueuse.

9. Procédé suivant la revendication 5, dans lequel l'étape de traitement des pastilles consiste en une halogénation avec un solution aqueuse.

10. Procédé suivant la revendication 5, dans lequel l'étape de traitement des pastilles consiste en une hydroxylation avec une solution aqueuse.

11. Procédé suivant la revendication 5, dans lequel l'étape de traitement des pastilles consiste en une revêtement desdites pastilles avec une charge finement pulvérisée.

12. Procédé suivant la revendication 1, dans lequel le caoutchouc présentant un fluage à froid consiste en polybutadiène de bas poids moléculaire ayant une moyenne en poids du poids moléculaire d'environ 3000.

13. Procédé suivant la revendication 1, dans lequel le monomère renfermant de l'hydrogène actif est le caprolactame.